# EUROPEAN PATENT SPECIFICATION

(11) **EP 1 975 780 B1**
(45) Date of publication and mention of the grant of the patent: **23.09.2009**
(21) Application number: 08250925.8
(22) Date of filing: 17.03.2008
(51) Int. Cl.: G06F 7/58

(54) **Random number generator**
Zufallszahlengenerator
Générateur de nombres aléatoires

(30) Priority: 27.03.2007 JP 2007082584
(43) Date of publication of application: 01.10.2008
(73) Proprietor: Kabushiki Kaisha Toshiba, Minato-ku, Tokyo 105-8001 (JP)
(72) Inventor: Yasuda, Shinichi, Minato-ku Tokyo 105-8001 (JP); Abe, Keiko, Minato-ku Tokyo 105-8001 (JP); Tanamoto, Tetsufumi, Minato-ku Tokyo 105-8001 (JP); Nomura, Kumiko, Minato-ku Tokyo 105-8001 (JP)
(74) Representative: Granleese, Rhian Jane

(56) References cited:
- EP-A- 1 197 846
- EP-A- 1 293 889
- EP-A- 1 715 409
- US-A1- 2004 006 580

## Description

The present invention relates to a random number generator adapted to generate random number sequence using physical fluctuations.

With the advance of information communication technology typified by the Internet, the demand for information security has increased. The strength of information security depends on the quality of random number sequence which produce the difficulty of prediction. The random number sequence has been used in the fields of scientific calculations and games as well.

Heretofore, a random number sequence (called arithmetic random numbers) has been known which is generated on the basis of a pseudo-random number generating algorithm. The arithmetic random numbers, being generated on the basis of an algorithm, are theoretically predictable and can be calculated prior to generation if an internal initial value (seed) is known. On the other hand, an approach has been proposed which generates difficult-to-predict random number sequence through the use of physical fluctuations, such as noise in semiconductor integrated circuits or elements.

With a random number generator described in JP-A 2003-131867 (KOKAI), noise generated by a device is amplified by an amplifier and then filtered in a required frequency band, and the resulting signal is compared with a reference voltage in a comparator. This random number generator generates random number sequence using a binarized signal obtained by sampling the results of the comparison in that comparator. In order for this random number generator to achieve a high bit rate in random number generation, it is required to utilize high-frequency components of noise; however, the amplification factor (gain) of a differential amplifier used as the comparator is low for high-frequency signals, resulting in failure to obtain a binarized signal of sufficient amplitude. It is therefore required to secure a sufficient amplitude in advance using a high-gain circuit; however, high-gain circuits generally have a narrow range of input voltages. As noise generated in semiconductor circuits, flicker noise (1/f noise) is known, which is larger in intensity than so-called white noise and is therefore advantageous in that an amplifier can be made small. In order to achieve a high bit rate in random number generation, it is required to use high-frequency components of flicker noise; however, the amplitude of flicker noise is much larger in the low-frequency range than in the high-frequency range. For this reason, when use is made of a high-gain circuit which is narrow in the range of input voltages as described stated, the binarized signal may be strongly affected by the low-frequency components of flicker noise and consequently fixed at a high or low level irrespective of fluctuations of high-frequency components of flicker noise.

A random number generator described in JP-A 2001-100980 (KOKAI) is adapted to produce a plurality of binarized signals through the use of a plurality of comparators each with a different threshold voltage for digitization and perform a logical operation on the binarized signals to generate random number sequence.

The above-described random number generator disclosed in JP-A 2003-131867 (KOKAI) is not suited to achieve a high random number generation bit rate because it is difficult to generate random number sequence using the high-frequency components of flicker noise. The random number generator disclosed in JP-A 2001-100980 (KOKAI) requires two or more comparators and a circuit to produce two or more reference voltages (threshold voltages for digitization) to be applied to the comparators, resulting in increased circuit scale.

An object of the present invention is to provide a random number generator is provided which is capable of achieving a high bit rate of random number generation while preventing the circuit scale from increasing.

According to an aspect of the invention, there is provided a random number generator comprising: an amplifier to amplify a difference between a noise signal and a reference signal to generate an amplified signal; a plurality of binarization circuits configured to binarize the amplified signal by using different inherent threshold values to obtain a plurality of binarized signals; and an exclusive OR circuit to perform an exclusive OR operation on the a plurality of binarized signals to generate random number sequence.

According to the present invention, a random number generator is provided which is capable of achieving a high bit rate of random number generation while preventing the circuit scale from increasing.

The invention can be more fully understood from the following detailed description when taken in conjunction with the accompanying drawings, in which:
FIG. 1 is a block diagram of a random number generator according to a first embodiment;
FIG. 2 shows a circuit arrangement of the differential amplifier shown in FIG. 1;
FIGS. 3A, 3B and 3C show exemplary circuit arrangements of the binarization circuits shown in FIG. 1;
FIG. 4 shows input/output characteristics of the respective binarization circuits shown in FIGS. 3A, 3B and 3C;
FIGS. 5A, 5B and 5C show exemplary circuit arrangements of the binarization circuits shown in FIG. 1;
FIG. 6 shows input/output characteristics of the respective binarization circuits shown in FIGS. 5A, 5B and 5C;
FIG. 7A shows the waveform of a signal input to the random number generator shown in FIG. 1; FIG. 7B shows the waveform of an output signal of the differential amplifier of FIG. 1 when the signal shown in FIG. 7A is input to it;
FIG. 7C shows the waveforms of output signals of three binarization circuits of FIG. 1 when the signal shown in FIG. 7B is input to them;
FIG. 7D shows the waveform of an output signal of the logic circuit of FIG. 1 when the signals shown in FIG. 7C are input to it;
FIG. 8 is a graph illustrating the spectral density of flicker noise as a function of frequency;
FIG. 9 is a block diagram of a random number generator according to a second embodiment;
FIG. 10 is a block diagram of a random number generator according to a third embodiment;
FIG. 11 is a block diagram of a random number generator according to a fourth embodiment; and
FIG. 12 is a block diagram of a random number generator according to a fifth embodiment.

The embodiments of the present invention will be described hereinafter with reference to the accompanying drawings.

### (First Embodiment)

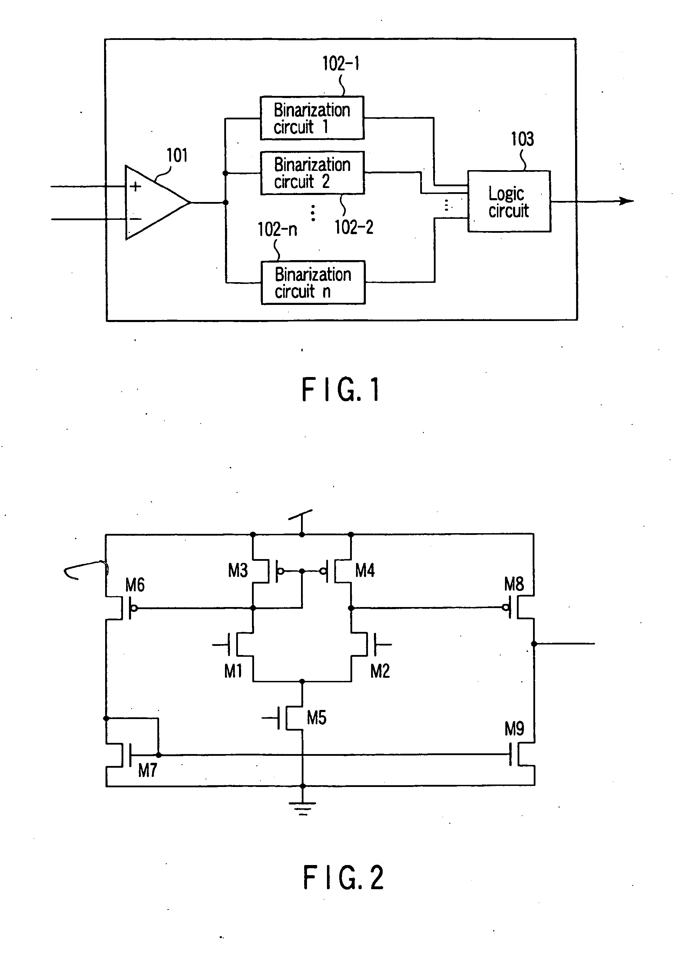

As shown in FIG. 1, a random number generator according to a first embodiment of the present invention includes a differential amplifier 101, a number of binarization (binary coding) circuits 102-1 to 102-n (n is a natural number greater than two), and a logic circuit 103. The random number generator has first and second input terminals and an output terminal and outputs at the output terminal a pulse train (random number sequence) generated on the basis of two input signals applied to the first and second input terminals.

The differential amplifier 101 has a non-inverting input terminal, an inverting input terminal, and an output terminal. Each of the non-inverting input terminal and the inverting input terminal of the differential amplifier 101, which are the first and second input terminals of the random number generator, is connected to receive a respective one of two input signals to the random number generator. The differential amplifier 101 amplifies the difference between the first input signal of voltage V1 applied to its non-inverting input terminal and the second input signal of voltage V2 applied to its inverting input terminal to output an output signal of voltage Vout = A(V1-V2) where A is the gain of the differential amplifier.

In this embodiment, it is assumed that the first input signal is a noise signal and the second input signal is a reference signal. As a result, the amplitude of the output signal of the differential amplifier 101 has random fluctuations. Specifically, the differential amplifier 101 is implemented by, for example, a two-stage differential amplifier which is shown in FIG. 2.

The differential amplifier shown in FIG. 2 is constructed from n-type MOS transistors M1, M2, M5, M7 and M9 and p-type MOS transistors M3, M4, M6 and M8. The p-type MOS transistor M6 and the n-type MOS transistor M7 form a bias circuit. The n-type MOS transistors M1, M2 and M5 and the p-type MOS transistors M3 and M4 form a differential amplifying stage (a first amplifying stage). The p-type MOS transistor M8 and the n-type MOS transistor M9 form a second amplifying stage. The gate terminals of the n-type MOS transistors M1 and M2 respectively function as the first and second input terminals to receive the first and second input signals. The drain terminal of the n-type MOS transistor M9 acts as the output terminal of the differential amplifier from which its output signal is taken.

The output signal of the differential amplifier 101 is applied to each of the binarization circuits 102-1 to 102-n. In order to enhance the driving performance of the differential amplifier, it is recommended that the channel width of each of the MOS transistors of the differential amplifier be set larger than the channel width of each of the MOS transistors that form the binarization circuits 102-1 to 102-n. In particular, it is advisable to set large the channel width of each of the MOS transistors corresponding to the output stage (the second amplifying stage) of the differential amplifier 101.

Specifically, since the number of the binarization circuits 102-1 to 102-n is n, the channel width of the MOS transistors that form the output stage of the differential amplifier 101 is simply set to a size of the order of n times the channel width of the MOS transistors that form the binarization circuits. In practice, however, when n is too sufficient a value, the channel width of those MOS transistors of the differential amplifier 101 may be set to a size of the order of n/3 or n/4 times the channel width of the MOS transistors of the binarization circuits. Conversely, the channel width of the MOS transistors that form the binarization circuits may be reduced by a factor of, say, n, n/3, or n/4. In this case as well, the same advantage will result.

The binarization circuits 102-1 to 102-n binarize the output signal of the differential amplifier 101 with reference to their respective inherent threshold values to output n number of binarized signals. Here, the inherent threshold is determined by the circuit arrangement and element selection of each individual binarization circuit and not controlled by an externally applied signal. The binarization circuits 102-1 to 102-n are implemented by displacing the inverting threshold values of n number of inverters connected to the same node relative to each other.

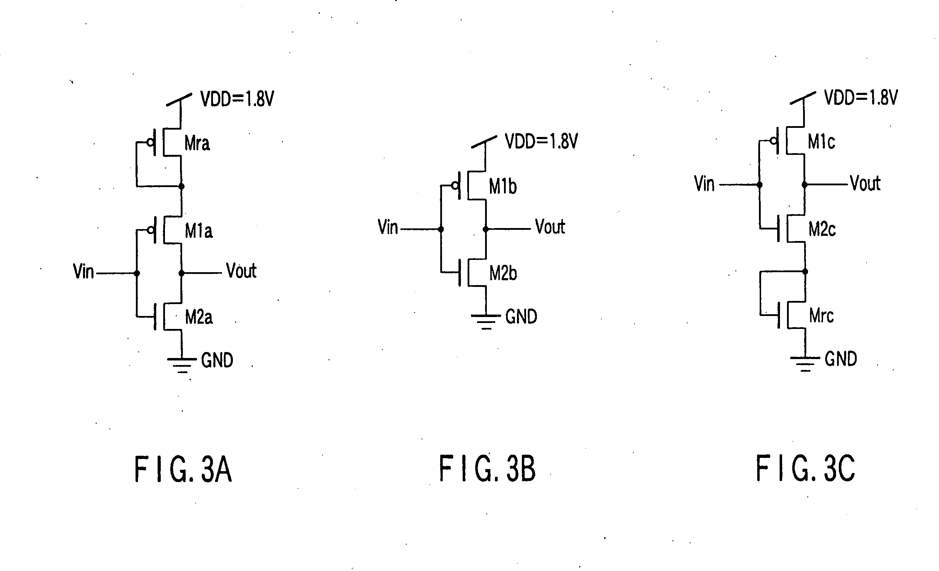

In order to displace the inverting threshold values of the respective inverters relative to each other, the process parameters of p- and n-type MOS transistors that form inverters are simply changed to thereby adjust the inverter threshold voltages Vth. Alternatively, their channel lengths or widths may be changed. Furthermore, as shown in FIG. 3A, a resistive load (for example, a diode-connected p-type MOS transistor) may be inserted between the source terminal of a p-type MOS transistor which is a constituent element of a CMOS inverter and power supply VDD, in which case the resistance of that resistive load is adjusted to change Vth. Moreover, as shown in FIG. 3C, a resistive load (for example, a diode-connected n-type MOS transistor) may be inserted between the source terminal of an n-type MOS transistor which is a constituent element of a CMOS inverter and ground GND. In this case as well, the resistance of that resistive load is adjusted.

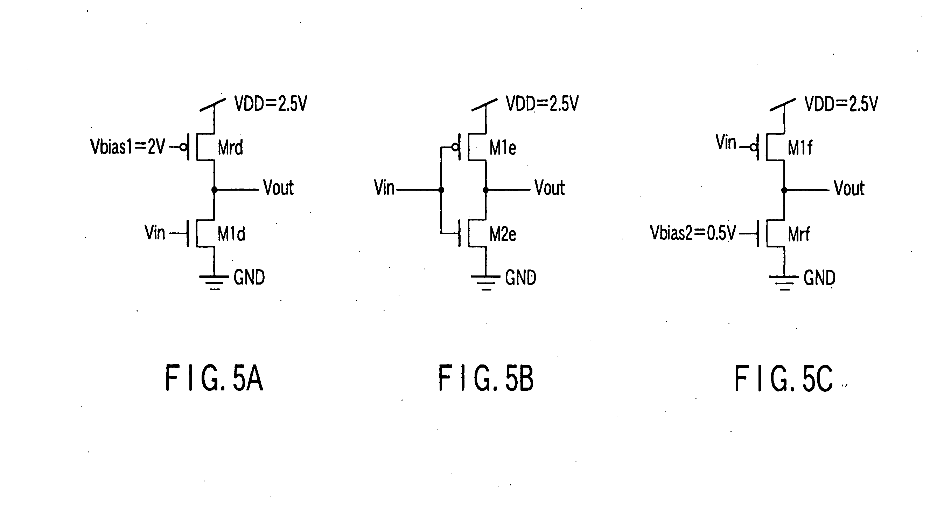

In addition, as shown in FIG. 5A, a resistive load (for example, a p-type MOS transistor which has its gate terminal supplied with a bias voltage from an adjustment voltage source) may be inserted between the drain terminal of an n-type MOS transistor having its gate terminal connected to receive an input signal and power supply VDD. Furthermore, as shown in FIG. 5C, a resistive load (for example, an n-type MOS transistor which has its gate terminal supplied with a bias voltage from an adjustment voltage source) may be inserted between the drain terminal of a p-type MOS transistor having its gate terminal connected to receive an input signal and ground GND. In each of the abovementioned circuits, changing the resistance of the resistive load allows the threshold voltage to be varied.

Here, the binarization circuits shown in FIG. 5A and 5C include the adjustment voltage sources. However, the scales of the binarization circuits shown in FIG. 5A and 5C are smaller than that of the comparator of the conventional random number generator.

The exemplary circuit arrangements of three binarization circuits 102-1 to 102-3 each having a different intrinsic threshold will be described below with reference to FIGS. 3A, 3B and 3C through FIG. 6.

As shown in FIG. 3A, the binarization circuit 102-1 having a first threshold THa comprises a CMOS inverter formed by a p-type MOS transistor M1a and an n-type MOS transistor M2a and a diode-connected p-type MOS transistor MRa which serves as a resistive load and is connected between the source terminal of the MOS transistor M1a and power supply VDD of 1.8 volts. As shown in FIG. 3B, the binarization circuit 102-2 having a second threshold THb comprises a CMOS inverter formed by a p-type MOS transistor M1b and an n-type MOS transistor M2b. As shown in FIG. 3C, the binarization circuit 102-3 having a third threshold The comprises a CMOS inverter formed by a p-type MOS transistor M1c and an n-type MOS transistor M2c and a diode-connected n-type MOS transistor MRc which serves as a resistive load and is connected between the source terminal of the MOS transistor M2c and ground GND.

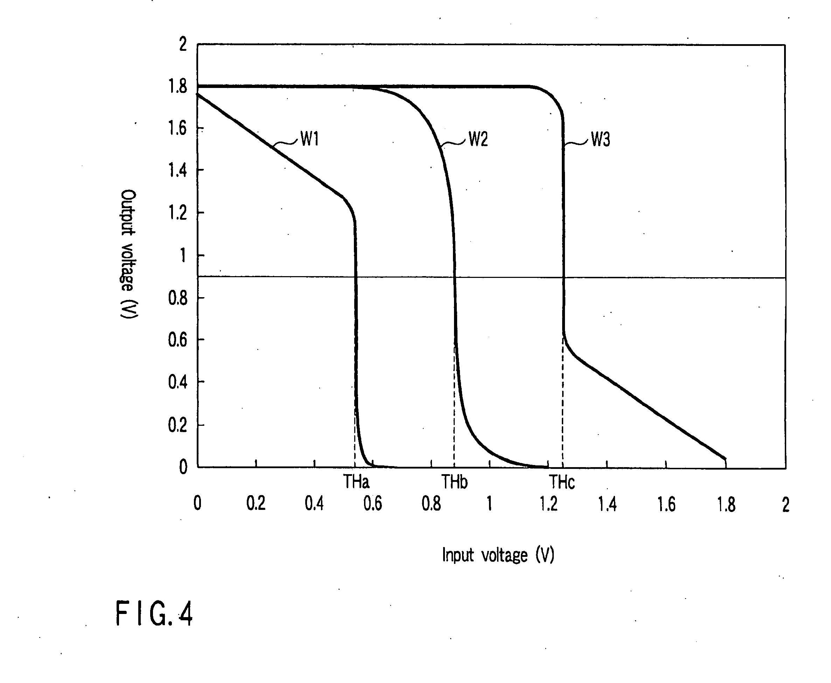

As shown in FIG. 4, the input/output characteristics of the binarization circuits 102-1, 102-2 and 102-3 shown in FIGS. 3A, 3B and 3C are indicated by curves W1, W2 and W3, respectively. Therefore, assuming that the logic circuit 103 to be described later is an exclusive OR circuit and if the input signal from the differential amplifier 101 is lower than the first threshold THa, all the outputs of the binarization circuits 102-1, 102-2 and 102-3 are high and consequently the random number output (the output of the logic circuit) is high. If the input from the differential amplifier is higher than or equal to the first threshold THa but lower than the second threshold THb, then the output of the binarization circuit 102-1 is low and the outputs of the binarization circuits 102-2 and 102-3 are both high, causing the random number output to go low. If the input signal from the differential amplifier is higher than or equal to the second threshold THb but lower than the third threshold THc, then the outputs of the binarization circuits 102-1 and 102-2 are both low and the output of the binarization circuit 102-3 is high, causing the random number output to go high. If the input signal from the differential amplifier is equal to or higher than the third threshold THc, then all the outputs of the binarization circuits are low, causing the random number output to go low.

As indicated by the input/output characteristics W1 and W3 in FIG. 4, the outputs of the corresponding binarization circuits shown in FIGS. 3A and 3C make no full swing on the low- or high-voltage side (i.e., the output of the binarization circuit of FIG. 3A does not reach supply voltage 1.8 V and the output of the binarization circuit of FIG. 3C does not reach ground potential 0 V). However, this problem can be solved by connecting such a usual CMOS inverter as shown in FIG. 3B to the output of each of these binarization circuits.

On the other hand, as shown in FIG. 5A, the binarization circuit 102-1 having a first threshold THd comprises an n-type MOS transistor Md1 having its gate terminal connected to receive an input signal and a p-type MOS transistor Mrd having its drain-source path connected between the source terminal of the transistor Md1 and supply voltage VDD of 2.5 V and its gate terminal connected to receive a bias voltage Vbias1 of 2.0 V from an adjustment voltage source. As shown in FIG. 5B, the binarization circuit 102-2 having a second threshold THe comprises a CMOS inverter formed by a p-type MOS transistor M1e and an n-type MOS transistor M2e. As shown in FIG. 5C, the binarization circuit 102-3 having a third threshold THf comprises a p-type MOS transistor Mf1 having its gate terminal connected to receive an input signal and an n-type MOS transistor Mrf having its drain-source path connected between the drain terminal of the transistor Mf1 and the ground GND and its gate terminal connected to receive a bias voltage Vbias2 of 0.5 V from an adjustment voltage source.

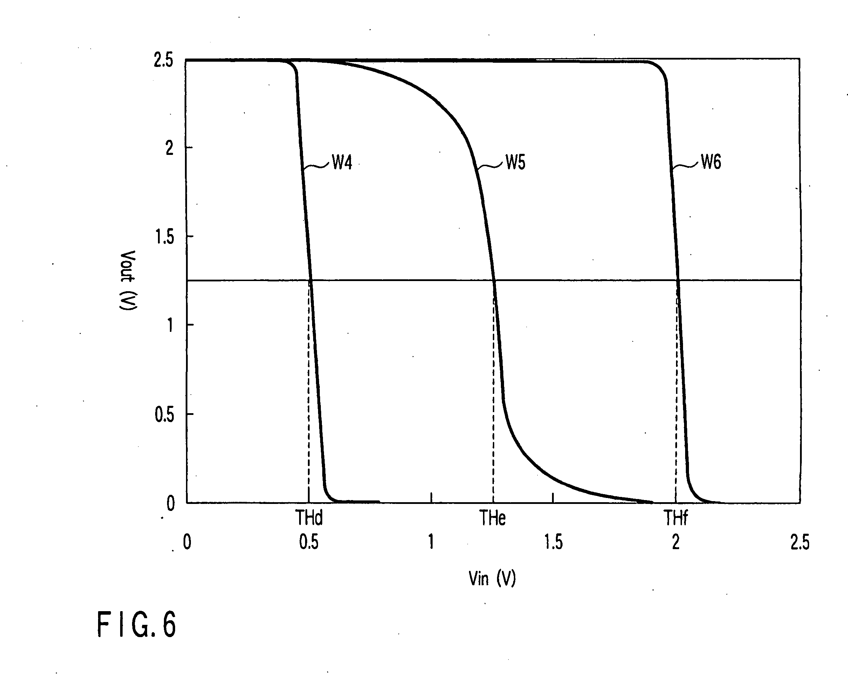

As shown in FIG. 6, the input/output characteristics of the binarization circuits 102-1, 102-2 and 102-3 are indicated by W4, W5 and W6, respectively. Therefore, assuming that the logic circuit 103 is an exclusive OR circuit and if the input signal from the differential amplifier 101 is lower than the first threshold THd, all the outputs of the binarization circuits 102-1, 102-2 and 102-3 are high, causing the random number output to go high. If the input signal from the differential amplifier is higher than or equal to the first threshold THd but lower than the second threshold THe, then the output of the binarization circuit 102-1 is low and the outputs of the binarization circuits 102-2 and 102-3 are both high, causing the random number output to go low. If the input signal from the differential amplifier is higher than or equal to the second threshold THe but lower than the third threshold THf, then the outputs of the binarization circuits 102-1 and 102-2 are both low and the output of the binarization circuit 102-3 is high, causing the random number output to go high. If the input from the differential amplifier is equal to or higher than the third threshold THf, then all the outputs of the binarization circuits are low, causing the random number output to go low.

The logic circuit 103 has n input terminals and one output terminal. The output terminal of the logic circuit 103 serves as the output terminal of the random number generator and outputs random number sequence generated by the random number generator shown in FIG. 1. The logic circuit 103 performs a logical operation on binarized signals input to its n number of inputs to obtain a random number as an output signal. An output random number sequence is formed by random number sequence each of one bit. Specifically, the logic circuit 103 performs an exclusive OR operation on the n number of binarized input signals in such a way as to provide a high-level output if an odd number of high-level signals is present in the n number of input signals or a low-level output if the number of high-level signals in the n number of input signals is even.

When the noise signal applied to the non-inverting input terminal of the differential amplifier 101 greatly fluctuates, the output signal of the differential amplifier can fall below or exceed the threshold of each of the binarization circuits 102-1 to 102-n to cause all the binarized signals to go either high or law. In such a case, when n is even, the output of the logic circuit 103 would be fixed at a low level. On the other hand, when n is odd, the output of the logic circuit 103 could go either low or high. It is therefore desirable that the number of the binarization circuits be odd. The logical operation carried out by the logic circuit 103 is not limited to the exclusive OR operation. For example, logical operations of NOT, OR and AND may be used in combination so as to obtain one random number from n number of binarized signals.

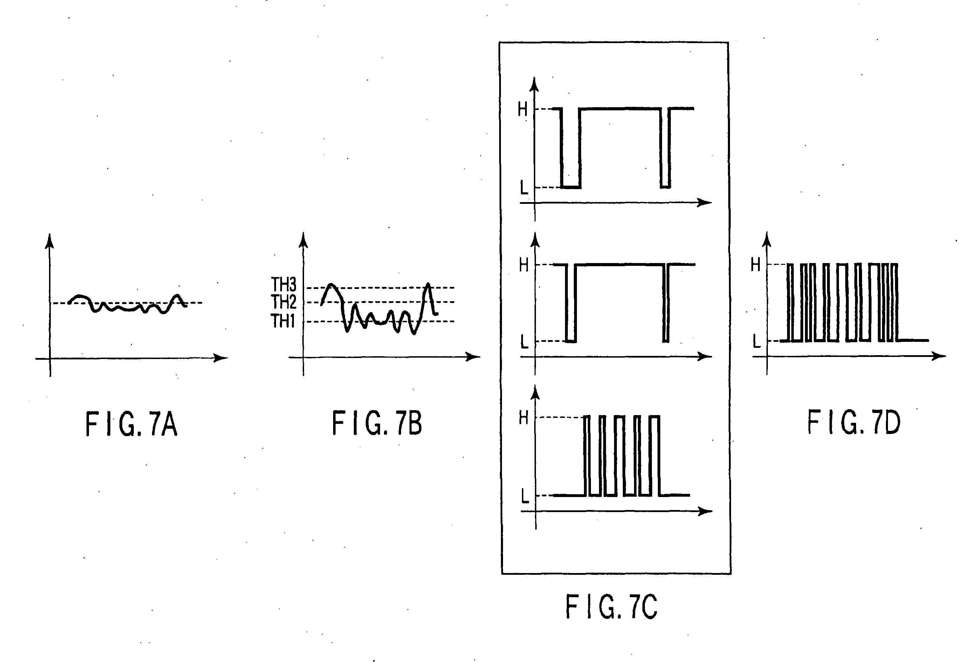

Reference is now made to FIGS. 7A, 7B, 7C and 7D to describe an example of signal processing in the random number generator of this embodiment. In the description which follows, it is assumed that the binarization circuits are composed of three binarization circuits 102-1, 102-2 and 102-3 which have threshold values TH1, TH2 and TH3, respectively, and the logic circuit 103 performs an exclusive OR operation.

Suppose, for example, that such a signal as shown in FIG. 7A is applied to the differential amplifier 101. In FIG. 7A, the solid line indicates a noise signal and the broken line indicates a reference signal. The differential amplifier 101 amplifies the difference between these signals to obtain such an amplified signal as shown in FIG. 7B. As shown in the lower portion of FIG. 7C, the binarization circuit 102-1 outputs a signal at a low level while the amplified signal shown in FIG. 7B is equal to or higher than the threshold TH1 and a signal at a high level while the amplified signal is lower than TH1. As shown in the upper portion of FIG. 7C, the binarization circuit 102-2 outputs a signal at a low level while the amplified signal of FIG. 7B is equal to or higher than the threshold TH2 and a signal at a high level while the amplified signal is lower than TH2. As shown in the middle portion of FIG. 7C, the binarization circuit 102-3 outputs a signal at a low level while the amplified signal is equal to or higher than TH3 and a signal at a high level while the amplified signal is lower than TH3. The logic circuit 103 performs an exclusive OR operation on the signals shown in FIG. 7C to output signals shown in FIG. 7D as a random number. That is, the logic circuit 103 provides a high-level output when there is an odd number of high-level signals in the three signals shown in FIG. 7C or a low-level output in the case of an even-number of high-level signals.

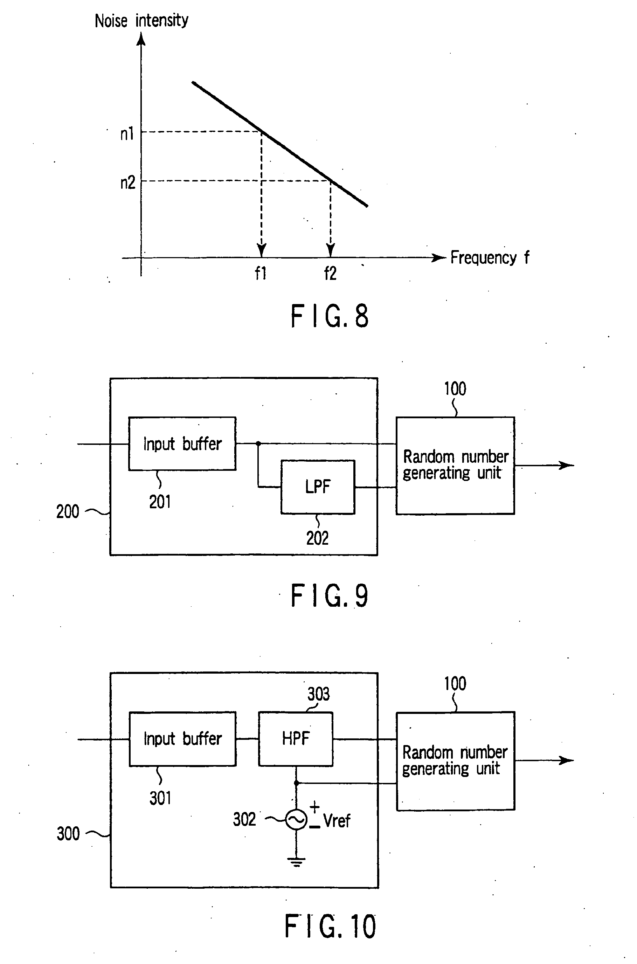

As described above, this embodiment is adapted to obtain random number sequence by obtaining a plurality of binarized signals from binarization circuits 102-1 to 102-n each with a separate threshold and performing a logical operation on these binarized signals. Therefore, the random number generator of this embodiment can use, for example, high-frequency components of flicker noise low in amplitude for random number generation, allowing a high random number generation rate to be achieved. Explaining conceptually this advantage, the random number generator of this embodiment can generate random number sequence even with a noise intensity of n2 which is lower than the limiting noise intensity n1 a conventional random number generator can use for random number generation as shown in FIG. 8. Therefore, when flicker noise is used, it becomes possible to use a frequency component of f2 which is higher than the limiting frequency f1 corresponding to the noise intensity n1, allowing a high random number generation rate to be achieved. In addition, unlike a conventional random number generator which uses a plurality of comparators, the random number generator of this embodiment does not need to generate threshold voltages for digitization and can therefore operate stably. Moreover, since there is no need for circuitry to generate threshold voltages, the circuit scale can be prevented from increasing.

### (Second Embodiment)

As shown in FIG. 9, a random number generator according to a second embodiment of the present invention is composed of a random number generating unit 100 which is identical in arrangement to the random number generator of the first embodiment and an input signal generating unit 200 that precedes the random number generating unit 100. The input signal generating unit 200 has an input buffer 201 and a low-pass filter (LPF) 202.

The input buffer 201 transfers an input noise signal to the first input terminal of the random number generating unit 100 and the LPF 202. The input buffer 201 has its input impedance set higher than those of the succeeding circuits in order to buffer the effects of the succeeding circuits on the noise signal.

The LPF 202 removes high-frequency components from the noise signal delivered from the input buffer 201 and transfers the resulting filtered signal to the second input terminal of the random number generating unit 100. The cutoff frequency of the LPF 202 is determined on the basis of, for example, a desired random number generation bit rate.

The random number generation unit 100 outputs at its output terminal a random number sequence generated on the basis of the noise signal applied to its first input terminal and the filtered signal input to its second input terminal.

As described above, the random number generator of this embodiment is configured to generate random number sequence through the use of a noise signal and a filtered signal in which high-frequency components have been removed from that noise signal by means of the LPF 202. Accordingly, low-frequency components are reduced to approximately zero in the difference between the noise signal and the filtered signal and noise remaining in the high-frequency components is mainly used to generate random number sequence, allowing high quality random number sequence to be generated at a desired bit rate.

### (Third Embodiment)

As shown in FIG. 10, a random number generator according to a third embodiment of the present invention is composed of a random number generating unit 100 which is identical in arrangement to the random number generator of the first embodiment and an input signal generating unit 300 that precedes the random number generating unit. The input signal generating unit 300 has an input buffer 301, a reference voltage source 302, and a high-pass filter (HPF) 303.

The input buffer 301 delivers an input noise signal to the HPF 303. The input buffer 301 has its input impedance set higher than those of the succeeding circuits in order to buffer the effects of the succeeding circuits on the noise signal.

The reference voltage source 302 is a voltage source to generate a reference voltage Vref. The reference voltage Vref is input to the second input terminal of the random number generating unit 100 and applied to the HPF 303.

The HPF 303 has frequency characteristics and filters a noise signal supplied from the input buffer 301 to remove low-frequency components. Note that the HPF 303 may be replaced by a bandpass filter to remove low-frequency components and unwanted high-frequency components. The HPF 303 delivers a filtered signal having low-frequency components removed to the first input terminal of the random number generating unit 100.

The random number generation unit 100 outputs at its output terminal a random number sequence generated on the basis of the noise signal applied to its first input terminal and the reference signal input to its second input terminal.

As described above, in the random number generator of this embodiment, low-frequency components are removed from a noise signal by means of the HPF 303 and consequently high-frequency components are mainly input to the first input terminal of the random number generation unit 100. Therefore, high quality random number sequence can be generated at a desired bit rate utilizing high-frequency components of the noise signal without being affected by low-frequency components of the noise signal.

### (Fourth Embodiment)

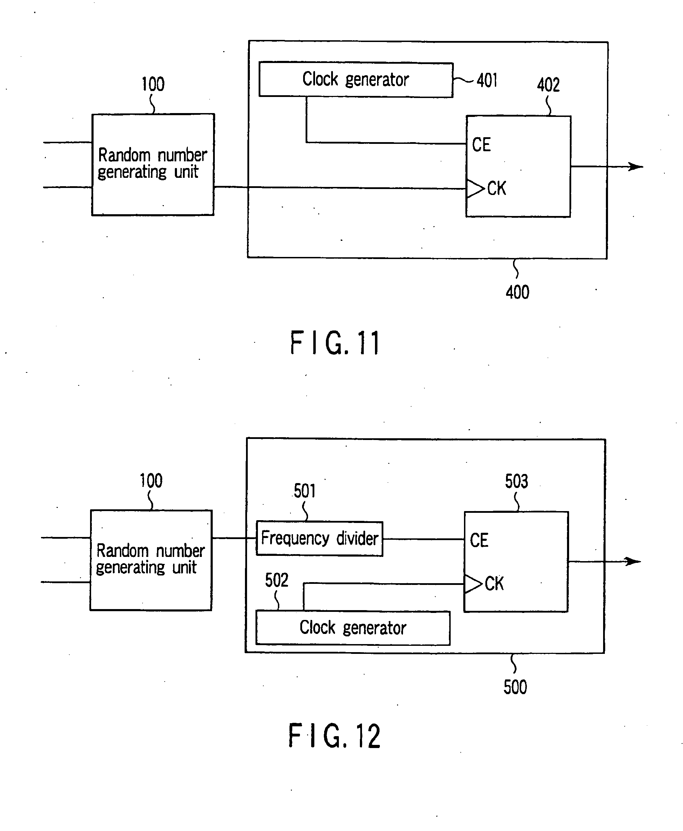

As shown in FIG. 11, a random number generator according to a fourth embodiment of the present invention is composed of a random number generating unit 100 which is identical in arrangement to the random number generator of the first embodiment and a random number correcting unit 400 that succeeds the random number generating unit 100. The random number correcting unit 400 has a clock generator 401 and a counter 402.

A random number sequence generated by the random number generating unit 100 is input to the clock (CK) terminal of the counter 402. The clock generator 401 generates clock pulses with a constant period and inputs them to the clock enable (CE) terminal of the counter 402.

The counter 402 counts the number of positive-going pulses input from the random number generating unit 100 to its CK terminal while a clock pulse input from the clock generator 401 to its CE terminal is high. The counter 402 outputs several low-order bits of the pulse count as corrected random number sequence. It is however desirable to output the least significant bit (LSB) (low-order bit) as a random number because the lower the bit position, the more the quality of random number sequence increases (there is little bias). In this case, the counter 402 can be formed by a one-bit counter.

As described above, in the random number generator of this embodiment, positive-going pulses generated by the random number generating unit 100 are counted by the counter 402 while a clock pulse generated by the clock generator 401 is high and several low-order bits of the count in the counter 402 are output as corrected random number sequence. Accordingly, even if the random number outputs of the random number generating unit 100 exhibit a bias, the bias can be corrected to provide random number generation with quality.

### (Fifth Embodiment)

As shown in FIG. 12, a random number generator according to a fifth embodiment of the present invention is composed of a random number generating unit 100 which is identical in arrangement to the random number generator of the first embodiment and a random number correcting unit 500 which follows the random number generating unit 100. The random number correcting unit 500 has a frequency divider 501, a clock generator 502, and a counter 503.

The random number generating unit 100 inputs a random number sequence generated to the frequency divider 501. The frequency divider 501 performs frequency-division the input random number sequence and then inputs the frequency-divided random number sequence to the CE terminal of the counter 503. The clock generator 502 generates clock pulses with a constant period and applies them to the CK terminal of the counter 503. It is to be noted here that the period of the clock pulses generated by the clock generator 502 is required to be shorter than that of the output pulses of the frequency divider 501. When pulses included in the random number sequence generated by the random number generating unit 100 are longer in period than the clock pulses generated by the clock generator 502, the random number sequence can be directly applied to the CE terminal of the counter 503 without the intervention of the frequency divider.

In operation, the counter 503 counts the clock pulses generated by the clock generator 502 and applied to its CK terminal while an output pulse of the frequency divider 501 input to its CE terminal is high. The counter 503 outputs several low-order bits of the count of clock pulses as corrected random number sequence. As stated above, the lower the bit position, the more the quality of random number sequence increases. It is therefore desirable to output the least significant bit (LSB) of the count as a random number. In this case, the counter 503 can be formed by a one-bit counter.

As described above, in the random number generator of this embodiment, the random number output generated by the random number generating unit 100 is subjected to frequency division in the frequency divider 501, the clock pulses generated by the clock generator 502 are counted by the counter 503 while the frequency divider output is high, and several low-order bits of the count in the counter 503 are output as corrected random number sequence. Accordingly, even if the random number output of the random number generating unit 100 has a bias, the bias can be corrected to provide random number generation with quality.

As an example, although the binarization circuits have been described in terms of specific circuit arrangements using transistors, they are illustrative and not restrictive.

## Claims

1. A random number generator comprising:
an amplifier (101) to amplify a difference between a noise signal and a reference signal to generate an amplified signal;
**characterised in that** it further comprises:
a plurality of binarization circuits (102-1,...,102-n) configured to binarize the amplified signal by using different inherent threshold values to obtain a plurality of binarized signals; and
an exclusive OR circuit (103) to perform an exclusive OR operation on the a plurality of binarized signals to generate random number sequence.

2. The random number generator according to claim 1, **characterized in that** the noise signal has a frequency characteristic such that its intensity decreases as frequency increases.

3. The random number generator according to either of claims 1 or 2, **characterized in that** the number of the binarization circuits is odd.

4. The random number generator according to any preceding claim, **characterized in that** each of the binarization circuits includes a CMOS inverter, the CMOS inverter including MOS transistors, and at least one of a size and process parameters of the MOS transistors being set different from circuit to circuit so that each of the binarization circuits has the different inherent threshold value.

5. The random number generator according to any of claims 1 to 3, **characterized in that** each of the binarization circuits includes a first conductivity type of MOS transistor including a first gate terminal connected to receive the amplified signal, a first source terminal connected to a first power supply, and a first drain terminal from which the binarized signal is taken; a second conductivity type of MOS transistor including a second gate terminal connected to receive the amplified signal, a second source terminal connected to a second power supply, and a second drain terminal from which the binarized signal is taken; and a resistive load connected between the first source terminal and the first power supply or between the second source terminal and the second power supply, a resistance of the resistive load being set different from circuit to circuit so that each of the binarization circuits has the different inherent threshold value.

6. The random number generator according to any of claims 1 to 3, **characterized in that** each of the binarization circuits includes a MOS transistor including a gate terminal connected to receive the amplified signal, a source terminal connected to a first power supply, and a drain terminal from which the binarized signal is taken; and a resistive load connected between the drain terminal and a second power supply, a value of the resistive load being set different from circuit to circuit so that each of the binarization circuits has the different inherent threshold value.

7. The random number generator according to any preceding claim, **characterized in that** the reference signal is a signal obtained by removing high-frequency components from the noise signal.

8. The random number generator according to any preceding claim, **characterized in that** the noise signal has low-frequency components removed prior to input to the amplifier.

9. The random number generator according to any preceding claim, **characterized by** further comprising:
a clock generator (401) to generate clock pulses; and
a counter (402) to count pulses included in the random number sequence during the duration of each of the clock pulses and output a least significant bit of a counted value as corrected random number sequence.

10. The random number generator according to claim 1, **characterized by** further comprising:
a clock generator (502) to generate clock pulses,
a frequency divider (501) to divide a frequency of the random number sequence to obtain frequency-divided pulses; and
a counter (503) to count the clock pulses during the duration of each of the frequency-divided pulses and output a least significant bit of a counted value as corrected random number sequence.

11. The random number generator according to any of claims 1 to 9, **characterized by** further comprising:
a clock generator (502) to generate clock pulses shorter in period than pulses included in the random number sequence; and
a counter (503) to count the clock pulses during the duration of each pulse in the pulses included in the random number sequence and output a least significant bit of accounted value as corrected random number sequence.

12. The random number generator according to any preceding claim, **characterized in that** the noise signal contains flicker noise.

13. The random number generator according to any preceding claim, **characterized in that** the amplifier includes a first MOS transistors and the binarization circuits include a second MOS transistor, and the channel width of the first MOS transistor is wider than that of the second MOS transistor.

## Patentansprüche

1. zufallszahlenerzeuger, mit:
einem Verstärker (101), um einen Unterschied in einem Rauschsignal und einem Referenzsignal zu verstärken, um ein verstärktes Signal zu erzeugen;
**dadurch gekennzeichnet, dass** dieser weiter umfasst:
eine Vielzahl von Digitalisierungsschaltungen (102-1, ..., 102-n) , die konfiguriert sind, das verstärkte Signal durch Verwenden unterschiedlicher, inhärenter Schwellwerte zu Digitalisieren, um eine Vielzahl von digitalisierten Signalen zu erhalten; und
eine Exklusiv-ODER-Schaltung (103), um eine Exklusiv-ODER-Operation auf der Vielzahl von digitalisierten Signalen durchzuführen, um eine Zufallszahlenabfolge zu erzeugen.

2. Zufallszahlenerzeuger nach Anspruch 1, **dadurch gekennzeichnet, dass** das Rauschsignal eine derartige Frequenzeigenschaft aufweist, dass seine Intensität abnimmt, wenn eine Frequenz zunimmt.

3. Zufallszahlenerzeuger nach einem der Ansprüche 1 oder 2, **dadurch gekennzeichnet, dass** die Digitalisierungsschaltungen ungerade sind.

4. Zufallszahlenerzeuger nach einem der vorangehenden Ansprüche, **dadurch gekennzeichnet, dass** jede der Digitalisierungsschaltungen einen CMOS-Inverter einschließt, wobei der CMOS-Inverter MOS-Transistoren einschließt und zumindest einer eines Größen- und Prozessparameters der MOS-Transistoren von Schaltung zu Schaltung unterschiedlich gesetzt wird, so dass jede der Digitalisierungsschaltungen den unterschiedlichen, inhärenten Schwellwert aufweist.

5. Zufallszahlenerzeuger nach einem der Ansprüche 1 bis 3, **dadurch gekennzeichnet, dass** die Digitalisierungsschaltungen einen ersten Leitfähigkeitstyp eines MOS-Transistors einschließlich einem ersten Gate-Anschluss, der verbunden ist, um das verstärkte Signal zu empfangen, einem ersten Source-Anschluss, der mit einer ersten Leistungsversorgung verbunden ist und einem ersten Drain-Anschluss, von dem das digitalisierte Signal genommen wird; einen zweiten Leitfähigkeitstyp eines MOS-Transistors einschließlich einem zweiten Gate-Anschluss, der verbunden ist, um das verstärkte Signal zu empfangen, einem zweiten Source-Anschluss, der mit einer zweiten Leistungsversorgung verbunden ist und einem zweiten Drain-Anschluss, von dem das digitalisierte Signal genommen wird; und eine Widerstandslast einschließen, die zwischen dem ersten Source-Anschluss und der ersten Leistungsversorgung oder zwischen dem zweiten Source-Anschluss und der zweiten Lezstungsversorgung verbunden ist, wobei ein Widerstand der Widerstandslast unterschiedlich von Schaltung zu Schaltung gesetzt wird, so dass jede der Digitalisierungsschaltungen den unterschiedlichen, inhärenten Schwellwert aufweist.

6. Zufallszahlenerzeuger nach einem der Ansprüche 1 bis 3, **dadurch gekennzeichnet, dass** jede der Digitalisierungsschaltungen einen MOS-Transistor einschließlich einem Gate-Anschluss, der verbunden ist, um das verstärkte Signal zu empfangen, einem Source-Anschluss, der mit einer ersten Leistungsversorgung verbunden ist, und einem Drain-Anschluss, von dem das digitalisierte Signal genommen wird; und eine Widerstandslast einschließt, die zwischen dem Drain-Anschluss und einer zweiten Leistungsversorgung verbunden ist, wobei ein Wert der Widerstandslast von Schaltung zu Schaltung unterschiedlich gesetzt wird, so dass jede der Digitalisierungsschaltungen den unterschiedlichen, inhärenten Schwellwert aufweist.

7. Zufallszahlenerzeuger nach einem der vorangehenden Ansprüche, **dadurch gekennzeichnet, dass** das Referenzsignal ein Signal ist, das durch Entfernen von Hochfrequenzkomponenten aus dem Rauschsignal erhalten wird.

8. Zufallszahlenerzeuger nach einem der vorangehenden Ansprüche, **dadurch gekennzeichnet, dass** das Rauschsignal Niederfrequenzkomponenten aufweist, die vor einer Eingabe in den Verstärker entfernt werden.

9. Zufallszahlenerzeuger nach einem der vorangehenden Ansprüche, weiter **gekennzeichnet durch**:
einen Takterzeuger (401), um Taktpulse zu erzeugen; und
einen Zähler (402), um Pulse, die in der Zufallszahlenabfolge eingeschlossen sind, während der Dauer jedes der Taktpulse zu zählen und ein niederwertigstes Bit eines gezählten Wertes als eine korrigierte Zufallszahlenabfolge auszugeben.

10. Zufallszahlenerzeuger nach Anspruch 1, **gekennzeichnet** weiter durch:
einen Takterzeuger (502), um Taktpulse zu erzeugen, einen Frequenzteiler (501), um eine Frequenz der Zufallszahlenabfolge zu teilen, um Frequenz-geteilte Pulse zu erhalten; und
einen Zähler (503), um die Taktpulse während der Dauer jedes der Frequenz-geteilten Pulse zu zählen und zumindest ein niederwertigstes Bit eines gezählten Wertes als korrigierte Zufallszahlenabfolge auszugeben.

11. Zufallszahlenerzeuger nach einem der Ansprüche 1 bis 9, **gekennzeichnet** weiter durch:
einen Takterzeuger (502), um Taktpulse zu erzeugen, die in einer Periode kürzer sind als Pulse, die in der Zufallszahlenabfolge eingeschlossen sind; und
einem Zähler (503), um die Taktpulse während der Dauer jedes Pulses in den Pulsen zu zählen, die in der Zufallzahlenabfolge eingeschlossen sind und ein niederwertigstes Bit eines gezählten Wertes als korrigierte Zufallszahlenabfolge auszugeben.

12. Zufallszahlenerzeuger nach einem der vorangehenden Ansprüche, **dadurch gekennzeichnet, dass** das Rauschsignal Funkelrauschen umfasst.

13. Zufallszahlenerzeuger nach einem der vorangehenden Ansprüche, **dadurch gekennzeichnet, dass** der Verstärker einen ersten MOS-Transistor einschließt und die Digitalisierungsschaltungen einen zweiten MOS-Transistor einschließen und die Kanalbreite des ersten MOS-Transistors breiter als jene des zweiten MOS-Transistors ist.

## Revendications

1. Générateur de nombres aléatoires comprenant :
un amplificateur (101) destiné à amplifier une différence entre un signal de bruit et un signal de référence, en vue de générer un signal amplifié; **caractérisé en ce qu'**il comporte en outre :
une pluralité de circuits de binarisation (102 - 1, ..., 102 - n) configurés pour binariser le signal amplifié en faisant appel à différentes valeurs seuil inhérentes pour obtenir une pluralité de signaux binarisés ; et
un circuit logique OU exclusif (103) en vue de mettre en oeuvre une opération logique OU exclusif sur la pluralité de signaux binarisés afin de générer une séquence de nombres aléatoires.

2. Générateur de nombres aléatoires selon la revendication 1, **caractérisé en ce que** le signal de bruit présente une caractéristique de fréquence, de sorte que son intensité diminue à mesure que la fréquence augmente.

3. Générateur de nombres aléatoires selon l'une quelconque des revendications 1 ou 2, **caractérisé en ce que** le nombre de circuits de binarisation est un nombre impair.

4. Générateur de nombres aléatoires selon l'une quelconque des revendications précédentes, **caractérisé en ce que** chacun des circuits de binarisation comprend un inverseur à semi-conducteur à oxyde de métal complémentaire (CMOS), l'inverseur CMOS comportant des transistors à semi-conducteur à oxyde de métal (MOS), et **en ce qu'**au moins un paramètre parmi des paramètres de traitement et de taille du transistors MOS est défini de manière différente d'un circuit à un autre, de sorte que chacun des circuits de binarisation présente la valeur seuil inhérente distincte.

5. Générateur de nombres aléatoires selon l'une des revendications 1 à 3, **caractérisé en ce que** chacun des circuits de binarisation comprend un premier type de conductivité de transistor MOS comportant une première borne de grille connectée de manière à recevoir le signal amplifié, une première borne de source connectée à une première alimentation électrique, et une première borne de drain à partir de laquelle le signal binarisé est prélevé; un second type de conductivité de transistor MOS comportant une seconde borne de grille connectée de manière à recevoir le signal amplifié, une seconde borne de source connectée à une seconde alimentation électrique, et une seconde borne de drain à partir de laquelle le signal binarisé est prélevé ; et une charge résistive connectée entre la première borne de source et la première alimentation électrique ou entre la seconde borne de source et la seconde alimentation électrique, une résistance de la charge résistive étant définie de manière différente d'un circuit à un autre, de sorte que chacun des circuits de binarisation présente la valeur seuil inhérente distincte.

6. Générateur de nombres aléatoires selon l'une quelconque des revendications 1 à 3, **caractérisé en ce que** chacun des circuits de binarisation comprend un transistor MOS comportant une borne de grille connectée de manière à recevoir le signal amplifié, une borne de source connectée à une première alimentation électrique, et une borne de drain à partir de laquelle le signal binarisé est prélevé ; et une charge résistive connectée entre la borne de drain et une seconde alimentation électrique, une valeur de la charge résistive est définie de manière différente d'un circuit à un autre, de sorte que chacun des circuits de binarisation présente la valeur seuil inhérente distincte.

7. Générateur de nombres aléatoires selon l'une quelconque des revendications précédentes, **caractérisé en ce que** le signal de référence est un signal obtenu en supprimant des composantes de haute fréquence du signal de bruit.

8. Générateur de nombres aléatoires selon l'une quelconque des revendications précédentes, **caractérisé en ce que** le signal de bruit présente des composantes de basse fréquence supprimées avant l'introduction du signal dans l'amplificateur.

9. Générateur de nombres aléatoires selon l'une quelconque des revendications précédentes, **caractérisé en ce qu'**il comporte en outre :
un générateur d'horloge (401) destiné à générer des impulsions d'horloge ; et
un compteur (402) destiné à compter des impulsions incluses dans la séquence de nombres aléatoires pendant la durée de chacune des impulsions d'horloge et à générer en sortie un bit de poids faible d'une valeur comptée en tant que séquence de nombres aléatoires corrigée.

10. Générateur de nombres aléatoires selon la revendication 1, **caractérisé en ce qu'**il comporte en outre :
un générateur d'horloge (502) destiné à générer des impulsions d'horloge,
un diviseur de fréquence (501) destiné à diviser une fréquence de la séquence de nombres aléatoires en vue d'obtenir des impulsions à fréquence divisée ; et
un compteur (503) destiné à compter les impulsions d'horloge pendant la durée de chacune des impulsions à fréquence divisée et à générer en sortie un bit de poids faible d'une valeur comptée en tant que séquence de nombres aléatoires corrigée.

11. Générateur de nombres aléatoires selon l'une quelconque des revendications 1 à 9, **caractérisé en ce qu'**il comporte en outre :
un générateur d'horloge (502) destiné à générer des impulsions d'horloge présentant une période plus courte que celle des impulsions incluses dans la séquence de nombres aléatoires ; et
un compteur (503) destiné à compter les impulsions d'horloge pendant la durée de chaque impulsion dans les impulsions incluses dans la séquence de nombres aléatoires et à générer en sortie un bit de poids faible d'une valeur comptée en tant que séquence de nombres aléatoires corrigée.

12. Générateur de nombres aléatoires selon l'une quelconque des revendications précédentes, **caractérisé en ce que** le signal de bruit contient du bruit de scintillement.

13. Générateur de nombres aléatoires selon l'une quelconque des revendications précédentes, **caractérisé en ce que** l'amplificateur comprend un premier transistor MOS et **en ce que** les circuits de binarisation comportent un second transistor MOS, et **en ce que** la largeur de canal du premier transistor MOS est plus large que celle du second transistor MOS.
